# DEMANDE DE BREVET EUROPEEN

(11) **EP 1 779 919 A1**
(43) Date de publication de la demande: **02.05.2007**
(21) Numéro de dépôt: 05300882.7
(22) Date de dépôt: 31.10.2005
(51) Int. Cl.: B01D 53/56

(54) **Procédé amélioré de réduction des NOx, dispositif et application au traitement des fumées issues de la combustion des déchets ménagers**

(71) Demandeur: CONSTRUCTIONS INDUSTRIELLES DE LA MEDITERRANEE- CNIM, F-75008 Paris (FR)
(72) Inventeur: Laborel, Yann, 13260 Cassis (FR); Seguin, Philippe, 83140 Six Fours les Plages (FR)
(74) Mandataire: Thinat, Michel

(57) **Abrégé**

L'invention porte principalement sur un procédé de réduction de NOx dans un gaz en contenant et est essentiellement caractérisé en ce qu'il comprend au moins une étape d'injection de billes d'urée dans une zone d'injection du dit gaz de température est approximativement comprise entre 850°C et 1000°C.

L'invention porte également sur un dispositif pour mettre en oeuvre ce procédé dans lequel les billes d'urée sont injectées dans le gaz au travers d'au moins une buse (21, 22, 23, 24) dont les deux parois supérieure (37) et inférieure (38) de l'extrémité libre d'injection (3) convergent l'une vers l'autre.

Enfin, l'invention trouve notamment application dans le traitement des fumées issues de la combustion des déchets ménagers.

## Description

La présente invention concerne principalement un procédé de réduction des NOx dans un gaz en contenant.

L'invention concerne également un dispositif pour mettre en oeuvre ce procédé et trouve notamment application dans le traitement des fumées provenant de la combustion des déchets ménagers.

Les oxydes d'azotes (NOx) sont constitués principalement par le monoxyde d'azote (NO) et le dioxyde d'azote (NO₂) qui se forment lors des combustions à températures élevées.

La réduction de ces anhydrides d'acides est nécessaire pour diminuer leur émission dans l'atmosphère dont résultent notamment les pluies acides et les brouillards photochimiques.

Les NOx formés lors de la combustion des déchets ménagers sont essentiellement des NOx dits 'combustibles' qui se forment par oxydation de l'azote constituant le comburant et des NOx dits 'thermiques' qui se forment par réaction entre l'azote gazeux constituant l'air de combustion et les radicaux oxygène et hydroxyde dans la flamme.

La concentration des NOx dans les gaz de combustion est de l'ordre de 300 à 500 mg d'équivalent NO₂/N.m³ et le monoxyde d'azote est l'espèce majoritaire puisque représentant environ 95% des NOx total.

Sont connus des traitements dits primaires permettant de réduire les NOx par optimisation du processus de combustion de façon à limiter la formation d'oxydes d'azote.

Est également connu un traitement dit secondaire consistant à réduire chimiquement les oxydes d'azotes présents dans les gaz en les faisant réagir avec de l'ammoniaque.

L'inconvénient majeur de ce dernier traitement réside dans l'utilisation d'ammoniaque qui peut également être considéré comme un polluant.

L'invention se situe dans le cadre des traitements secondaires et propose un procédé à la fois économique, simple et utilisant des espèces chimiques non polluantes de façon à réduire significativement la quantité d'oxydes d'azote présents dans un gaz sans entraîner la formation d'espèces secondaires polluantes.

A cet effet, le procédé de l'invention est essentiellement caractérisé en ce que qu'il comprend au moins une étape d'injection de billes d'urée par voie pneumatique dans une zone d'injection du dit gaz de température est approximativement comprise entre 850°C et 1000°C.

Ce procédé de réduction non catalytique permet de réduire considérablement les NOx présents dans un gaz sans produire d'espèces secondaires nocives.

Avantageusement, les jets de billes d'urée sont aplatis de façon à injecter spécifiquement les billes d'urée dans la zone d'injection du gaz de température comprise entre 850°C et 1000°C.

En outre, les jets de billes d'urée peuvent comprendre chacun au moins un nuage principal et deux nuages secondaires de billes d'urée.

De préférence il est prévu une étape d'évaluation ou de mesure de la température du gaz à traiter de façon à déterminer la dite zone d'injection du gaz.

On peut prévoir que la mesure de température s'effectue consiste à mesurer l'énergie émise par les gaz pour générer un signal de température.

On peut également prévoir que l'évaluation de la température du gaz consiste à comparer le débit de vapeur du dit gaz avec le débit de vapeur nominal de l'installation et à déterminer ainsi la zone d'injection des billes d'urée.

De façon avantageuse, le procédé de l'invention prévoit une étape de sélection et/ou d'orientation des jets d'urée dans la zone d'injection du gaz selon la température mesurée.

De façon également avantageuse, les billes d'urée sont injectées au moyen d'air pressurisé.

Par ailleurs, le gaz à traiter peut être constitué de fumées ascendantes qui circulent dans une veine gazeuse.

Dans ce cas, les jets de billes d'urée peuvent être réparties selon au moins deux niveaux parmi lesquels un seul niveau est choisi pour assurer l'injection des billes d'urée selon la température du gaz mesurée ou évaluée à ce niveau.

Dans ce cas, les billes d'urée sont avantageusement injectées par le niveau haut, soit lorsque la zone du gaz dont la température est comprise entre 850°C et 1000°C est proche de ce niveau haut ou soit lorsque le débit de vapeur mesuré correspond au débit de vapeur de la charge nominale ou bien que le débit de vapeur mesuré est inférieur au débit de vapeur nominal en étant supérieur à 80% de ce débit de vapeur nominal, et les billes d'urée sont injectées par le niveau bas, soit lorsque la zone du gaz dont la température est comprise entre 850°C et 1000°C est proche de ce niveau bas ou soit lorsque le débit de vapeur mesuré est inférieur à 80% du débit de vapeur nominal.

L'invention porte également sur un dispositif pour mettre en oeuvre le procédé définit précédemment dans lequel les billes d'urée sont injectées dans le gaz au travers d'au moins une buse dont les deux parois supérieure et inférieure de l'extrémité libre d'injection convergent l'une vers l'autre.

Avantageusement, l'extrémité libre d'injection des buses comporte deux ouvertures latérales longitudinales diamétralement opposées s'étendant dans le plan de l'injection depuis l'orifice de sortie de la dite extrémité d'injection.

De préférence, l'extrémité libre d'injection comporte un éclateur permettant de générer deux nuages secondaires de jets d'urée répartis de part et d'autre d'un nuage principal circulant à travers l'orifice de sortie.

Dans ce cas, il peut être prévu que l'éclateur soit de section transversale triangulaire et s'étende perpendiculairement au plan d'injection de façon que l'une de ses faces soit orientée vers l'orifice de sortie.

De façon avantageuse, les buses sont montées affleurantes à une chambre de combustion et réparties sur au moins deux niveaux pourvus chacun d'au moins une buse.

De préférence dans ce cas, le dispositif de l'invention comporte un sélecteur du niveau de buse par lequel les billes d'urée sont injectées à un niveau donné selon la température du gaz à ce niveau.

Par ailleurs, il est possible de prévoir des moyens d'orientation des buses par lesquelles les billes d'urée sont injectées dans le gaz selon la température du gaz mesurée.

De façon avantageuse, la mesure de la température du gaz est effectuée par un pyromètre optique, qui mesure l'énergie émise par le gaz.

Egalement de façon avantageuse, le dispositif comprend également des surpresseurs qui génèrent de l'air pressurisé servant d'air de transport des billes d'urée vers les buses actives.

De préférence, les buses inactives 23,24 sont soient refroidies par l'air pressurisé généré par les surpresseurs, soit maintenues à distance des températures élevées par des moyens de retrait automatique.

L'invention est également dirigée vers l'utilisation du procédé et du dispositif décrits précédemment pour le traitement des fumées issus de la combustion des déchets ménagers préparés ou non.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation du dispositif de l'invention et sur lesquels :
- la figure 1 est une représentation schématique du dispositif de l'invention,
- la figure 2 est une représentation de coté d'une buse utilisée dans le dispositif de l'invention,
- la figure 3 est une représentation d'une buse en coupe selon l'axe XX' de la figure 2, et
- la figure 4 est une représentation en perspective selon la flèche notée IV sur la figure 3.

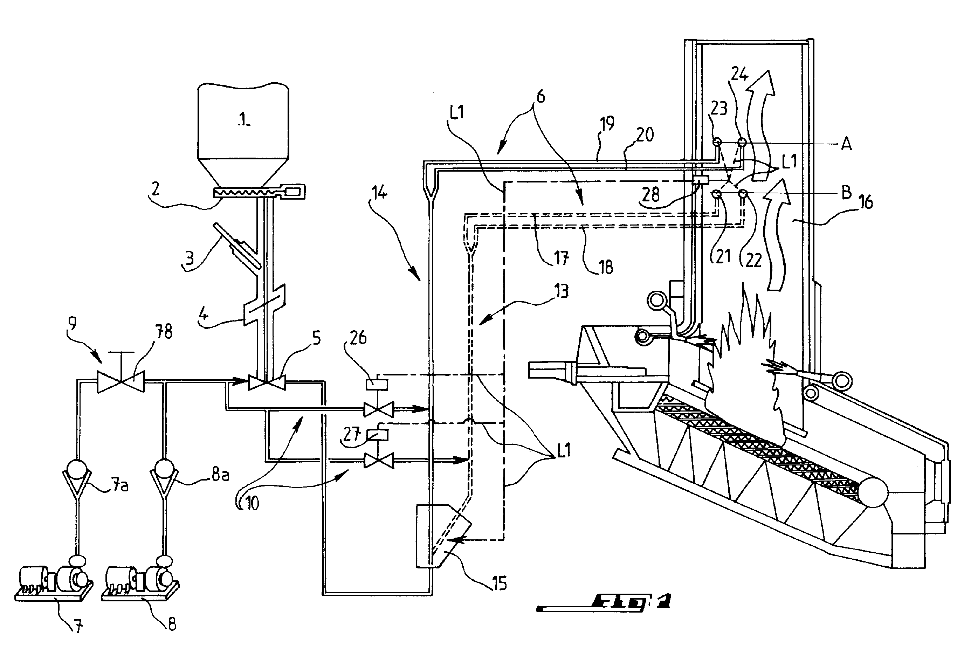

En référence à la figure 1, un sac de conditionnement 1, qui repose sur un trémie de réception 2 autorisant, sur commande, le passage des billes d'urée vers un détecteur de bourrage 3 qui contrôle la fluidité d'écoulement des billes, jusqu'à un filtre 4 duquel les billes d'urée filtrées s'écoulent jusqu'à une vanne d'introduction 5 qui autorise, sur commande également, l'introduction de ces billes dans le circuit d'injection 6 vers la chambre de combustion 16.

Il est à noter que les billes d'urée peuvent être également stockées dans un silo non représenté.

Deux surpresseurs 7,8 produisent de l'air pressurisé qui circule dans le circuit d'air de pulvérisation 9 en passant par deux clapets anti-retour 7a, 8a et une vanne 78.

Cet air pressurisé circule, d'une part jusqu'à la vanne d'introduction 5 formant entrée de l'air pressurisé dans le circuit d'injection 6, et d'autre part jusqu'à des première 26 et deuxième 27 électrovannes formant entrée de l'air pressurisé dans un circuit de balayage d'air 10 dont la fonctionnalité sera décrite plus loin.

Le circuit d'injection 6 comprend un circuit d'injection de niveau bas 13 et un circuit d'injection de niveau haut 14 qui peuvent être sélectivement activés par un sélecteur de niveau 15 disposé en aval de la vanne d'introduction 5, pour procéder à l'injection des billes d'urée dans la chambre de combustion 16 soit à un niveau haut A, soit à un niveau bas B.

Sur la figure 1, c'est le circuit d'injection de niveau haut 14 qui est actif, les billes d'urée étant ainsi introduites dans la chambre de combustion 16 par le niveau haut A.

Chaque circuit d'injection bas 13 et haut 14 comprend deux sous-circuits d'injection respectifs 17,18 et 19,20 au bout de chacun desquels une buse d'injection correspondante 21,22 et 23,24 est montée affleurante à la chambre de combustion 16.

De cette façon, les paires de buses d'injection 21,22 du circuit d'injection bas 14 sont disposées sur le niveau bas B et les paires de buses du circuit d'injection haut 23,24 sont disposées sur le niveau haut A.

Par ailleurs, les buses 21,22,23,24 sont positionnées dans la chambre de combustion de façon que la répartition du jeu d'urée soit optimum sans que la température de la chambre de combustion ne dégrade ces buses.

L'homme du métier saura positionner ces buses de manière appropriée, par exemple au moyen de brides, dont l'une d'entre elle est fixée à cette chambre de combustion.

Le dispositif de l'invention comporte également un circuit d'air de balayage 10 destiné à assurer la circulation d'air pressurisé provenant du circuit d'air de pulvérisation 9, dans le circuit d'injection bas 13 représenté inactif sur cette figure, afin de protéger les buses inactives 23,24 du rayonnement provenant de la chambre de combustion 16.

Ce circuit d'air de balayage 10 comporte des première 26 et deuxième 27 électrovannes qui assurent, sur commande, le passage de l'air pressurisé depuis le circuit d'air de pulvérisation 9 jusqu'à ces buses 23,24 inactives.

Le dispositif de l'invention comprend également un pyromètre optique 28 qui mesure l'énergie émise par les gaz issus des fumées par exemple dans la longueur d'onde des NOx afin de générer un signal de température et de connaître la température du gaz en une zone précise de la chambre de combustion 16.

Ce pyromètre 28 est relié à un calculateur et à un dispositif de commande non représenté qui actionnent, selon la température du gaz mesuré, le sélecteur de niveau 15, l'une ou les deux électrovannes 26, 27, ainsi que l'orientation et l'inclinaison des buses actives 21,22 au moyen d'un vérin électrique avec positionneur également non représenté, par l'intermédiaire de liaisons L1 représentées schématiquement par des traits mixtes et qui peuvent être de type filaire ou par voie hertzienne.

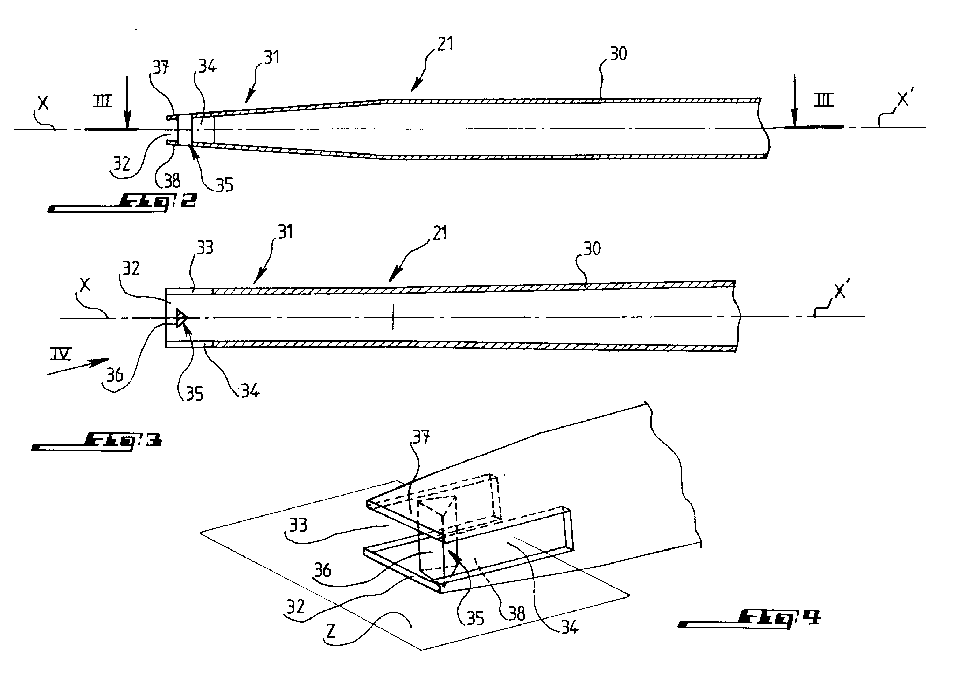

En référence aux figures 2, 3 et 4, les buses 21, 22,23,24, référencées pour simplifier uniquement 21 sur ces figures, se présentent sous la forme d'un tube 30 dont les deux parois supérieure 37 et inférieure 38 de l'extrémité libre d'injection 31 convergent l'une vers l'autre ce qui confère à cette extrémité libre d'injection 31 une forme aplatie visible sur la figure 4.

De plus, l'extrémité libre d'injection 31 comporte deux ouvertures latérales longitudinales diamétralement opposées 33,34 s'étendant dans le plan de l'injection Z depuis l'orifice de sortie 32.

De cette façon, le jet de billes d'urée est aplati ce qui permet de limiter l'écart de température au sein d'un même jet de billes d'urée et donc de spécifiquement diriger le jet d'urée vers la zone de température optimale.

Par ailleurs, l'extrémité libre d'injection 31 comporte également un éclateur prismatique 35 de section transversale triangulaire qui s'étend perpendiculairement au plan d'injection Z de façon que l'une de ses faces 36 soit orientée vers l'orifice de sortie 32.

Cet éclateur 35 permet de générer deux nuages de billes supplémentaires qui s'écoulent à travers les ouvertures latérales 32,34 de part et d'autre d'un nuage principal qui circule à travers l'orifice de sortie 32

La caractérisation des billes d'urée utilisées dans le procédé et le dispositif de l'invention est donnée ci-après.
Désignation : urée en grain
Formulation chimique : CO(NH₂)₂
Masse molaire (g) : 60
Apparence : perles, -granulés translucides - pH d'une solution à 10% : de 8 à 10 max.
Azote (N) : > 46,20%
Humidité : < 0,50%
Biuret : 0,60%
Formaldéhyde (durcisseur) : entre 0,15% et 0,3%
Fer : < 5 ppm
Mercure et Arsenic (As) : tous < 0,01 ppm
Cadmium (Cd) : < 0,2 ppm
Chrome, Nickel et Plomb : tous < 2 ppm
Cendres : < 20 ppm
Cuivre (Cu) : < 0, 5 ppm
insolubles dans l'eau : < 15 ppm

### GRANULOMETRIES

### Type 1

"Au tamis à mailles carrées" 1 < diamètre < 2,5 mm : > 95% masse
diamètre médian significatif 1,7 mm +/- 0,2 mm
fines (inf à 1) < 2% masse

### Type 2

"Au tamis à mailles carrées" 2 < diamètre < 5 mm : > 93% masse
5% diamètre supérieur à 5mm
fines (inf à 2 mm) < 2% masse

### CARACTERISTIQUES PHYSIQUES

### densité apparente :

- compactée : 750-800 kg/m³
- non compactée : 700-750 kg/m³

### CONDITIONNEMENT EN BIG BAG

volume : (500 ou 1000 kg) soit environ 1 ou 2 m³
section : 1,2 m par 1,2 m
Enveloppe externe (polypropylène) résistant au déchirement
Enveloppe interne (polyéthylène) de protection contre l'humidité

Le fonctionnement du dispositif représenté sur les figures est décrit ci-dessous.

Il a été trouvé, dans le cadre de l'invention, que la réduction significative des NOx pouvait être obtenue par réaction de ces NOx avec des billes d'urée à une température comprise entre 850°C et 1000°C.

Au-dessous de 850°C, les réactions avec l'urée génèrent la formation d'ammoniaque, et au-delà de 1000°C, l'urée se décompose en monoxyde d'azote.

Dans le dispositif de l'invention représenté sur la figure 1, la température du gaz issu des fumées est mesurée par le pyromètre optique 28.

La connaissance du gradient de température en °C/m parcouru par les gaz à partir du point de mesure du pyromètre et de l'écart de hauteur moyenne du jet d'urée au centre du foyer selon l'inclinaison des buses 21,22,23,24 permet d'évaluer le circuit d'injection bas 13 ou haut 14 qui doit être activé ainsi que l'inclinaison des buses actives correspondantes 21,22, 23,24.

Le dispositif de commande non représenté actionne le sélecteur de niveau 15 afin d'envoyer les billes d'urée véhiculées par l'air pressurisé, soit dans le circuit d'injection bas 13 soit dans le circuit d'injection haut 14 et actionne également le vérin électrique non représenté pour que les buses actives 21,22 de la figure 1 soient de l'inclinaison nécessaire pour le jet d'urée soit en contact avec une zone d'injection du gaz dont la température est comprise entre 850 et 1000°C.

Par ailleurs de l'air pressurisé est envoyé dans le circuit d'injection inactif 13 afin de refroidir les buses inactives correspondantes 21,22 exposées à des températures élevées.

Il est possible de prévoir des moyens de retrait non représentés des buses inactives pour les soustraire aux effets des températures élevées.

Dans ce cas, il sera inutile de les refroidir par l'air pressurisé ou par tout autre fluide pneumatique de balayage.

L'homme du métier saura déterminer et mettre en oeuvre les moyens de retrait appropriés.

Le procédé et le dispositif de l'invention permettent de garantir des valeurs d'émission en NOx inférieures à 200 mg d'équivalent NO₂/N.m³ sans que la quantité d'ammoniaque générée par la réaction ne dépasse 10mg/N.m³.

Il peut être prévu, à la place du pyromètre optique, un dispositif non représenté mesurant le débit de vapeur, qui, par comparaison à la valeur nominale du débit de vapeur de l'installation permet également de déterminer la zone d'injection de l'urée.

Dans ce cas, il a été déterminé que si le débit de vapeur mesuré correspond au débit de vapeur de la charge nominale ou si le débit de vapeur mesuré est inférieur au débit de vapeur nominal en étant supérieur à 80% du débit de vapeur nominal, les billes d'urée sont injectées par le circuit d'injection haut 14.

A l'inverse, si le débit de vapeur est inférieur à 80% du débit de vapeur nominal, les billes d'urée sont injectées par le circuit d'injection bas 13.

De cette façon, les billes d'urée sont injectées dans une zone du gaz dont la température est approximativement comprise entre 850 et 1000°C sans qu'aucune mesure de température ne soit prise.

Naturellement, l'homme du métier saura déterminer et mettre en oeuvre un dispositif de mesure du débit de vapeur adapté.

Par ailleurs, le nombre de niveaux A,B ainsi que le nombre de buses 21,22,23,24 par niveau est adapté à la dimension de la chambre de combustion.

Enfin, le dispositif et le procédé décrits précédemment trouvent notamment applications dans le traitement des fumées provenant de la combustion des déchets ménagers préparés ou non mais également pour le traitement de tout gaz contenant des NOx.

## Revendications

1. Procédé de réduction de NOx dans un gaz en contenant, **caractérisé en ce qu'**il comprend au moins une étape d'injection de billes d'urée par voie pneumatique dans une zone d'injection du dit gaz dont la température est approximativement comprise entre 850°C et 1000°C.

2. Procédé selon la revendication 1, dans lequel les jets de billes d'urée sont aplatis de façon à injecter spécifiquement les billes d'urée dans la dite zone d'injection de température comprise entre 850°C et 1000°C.

3. Procédé selon la revendication 2, dans lequel les jets de billes d'urée comprennent chacun au moins un nuage principal et deux nuages secondaires.

4. Procédé selon l'une quelconque des revendications précédentes, comprenant en outre une étape d'évaluation ou de mesure de la température du gaz à traiter de façon à déterminer la dite zone d'injection du gaz.

5. Procédé selon la revendication 4, dans lequel la mesure de la température du gaz consiste à mesurer l'énergie émise par les gaz pour générer un signal de température.

6. Procédé selon la revendication 4, dans lequel l'évaluation de la température du gaz consiste à comparer le débit de vapeur du dit gaz avec le débit de vapeur nominal de l'installation et à déterminer ainsi la zone d'injection des billes d'urée.

7. Procédé selon l'une quelconque des revendications précédentes, comprenant une étape de sélection et/ou d'orientation des jets d'urée dans la zone d'injection du gaz selon la température mesurée ou évaluée.

8. Procédé selon l'une quelconque des revendications précédentes, dans lequel les billes d'urée sont injectées au moyen d'air pressurisé.

9. Procédé selon l'une quelconque des revendications précédentes, dans lequel le gaz à traiter est constitué de fumées ascendantes qui circulent dans une veine gazeuse.

10. Procédé selon la revendication 9, dans lequel les jets de billes d'urée sont répartis selon au moins deux niveaux (A,B) parmi lesquels un niveau (A,B) est choisi pour assurer l'injection des billes d'urée selon la température du gaz mesurée ou évaluée à ce niveau.

11. Procédé selon la revendication 10 dans lequel les billes d'urée sont injectées par le niveau haut (14) lorsque, soit lorsque la zone du gaz dont la température est comprise entre 850°C et 1000°C est proche de ce niveau haut (14) ou soit lorsque le débit de vapeur correspond au débit de vapeur de la charge nominale ou bien que le débit de vapeur mesuré est inférieur au débit de vapeur nominal en étant supérieur à 80% de ce débit de vapeur nominal,
et dans lequel les billes d'urée sont injectées par le niveau bas (13) lorsque, soit la zone du gaz dont la température est comprise entre 850°C et 1000°C est proche de ce niveau bas (13), ou soit lorsque le débit de vapeur mesuré est inférieur à 80% du débit de vapeur nominal.

12. Dispositif pour mettre en oeuvre le procédé selon l'une quelconque des revendications 1 à 11, dans lequel les billes d'urée sont injectées dans le gaz au travers d'au moins une buse (21, 22, 23, 24) dont les deux parois supérieure (37) et inférieure (38) de l'extrémité libre d'injection (3) convergent l'une vers l'autre.

13. Dispositif selon la revendication 12, dans lequel l'extrémité libre d'injection (31) des buses (21, 22, 23, 24) comporte deux ouvertures latérales longitudinales diamétralement opposées (33, 34) s'étendant dans le plan de l'injection (Z) depuis l'orifice de sortie (32) de la dite extrémité d'injection (31).

14. Dispositif selon la revendication 13, dans lequel l'extrémité libre d'injection (31) comporte un éclateur (35) permettant de deux nuages secondaires de jets d'urée répartis de part et d'autre d'une nuage principal circulant à travers l'orifice de sortie (32).

15. Dispositif selon la revendication 14, dans lequel l'éclateur (35) est de section transversale triangulaire et s'étend perpendiculairement au plan d'injection (Z) de façon que l'une de ses faces (36) soit orientée vers l'orifice de sortie (32).

16. Dispositif selon l'une quelconque des revendications 12 à 15, dans lequel les buses (21, 22, 23, 24) sont montées affleurantes à une chambre de combustion (16) et réparties sur au moins deux niveaux (A, B) pourvus chacun d'au moins une buse (21, 22, 23, 24).

17. Dispositif selon la revendication 16, comprenant un sélecteur (35) du niveau (A, B) de buse par lequel les billes d'urée sont injectées à un niveau (A, B) donné selon la température du gaz à ce niveau (A, B).

18. Dispositif selon l'une quelconque des revendications 16 et 17, comprenant des moyens d'orientation des buses par lesquelles les billes d'urée sont injectées dans le gaz selon la température du gaz mesurée.

19. Dispositif selon l'une quelconque des revendications 12 à 18, comprenant un pyromètre optique (28) qui mesure l'énergie émise par le gaz dans la longueur d'onde des NOx à partir de laquelle la température d'une zone du gaz est évaluée.

20. Dispositif selon l'une quelconque des revendications 12 à 19 comprenant des surpresseurs qui génèrent de l'air pressurisé servant notamment d'air de transport des billes d'urée vers les buses actives (21,22).

21. Dispositif selon la revendication 20, dans lequel les buses inactives (23,24) sont soit refroidies par l'air pressurisé, soit maintenues à distance des températures élevées par des moyens de retrait automatique.

22. Application du procédé selon l'une quelconque des revendications 1 à 11 et du dispositif selon l'une quelconque des revendications 12 à 19 au traitement des fumées provenant de la combustion des déchets ménagers préparés ou non.
